# EUROPEAN PATENT SPECIFICATION

(11) **EP 3 922 528 B1**
(45) Date of publication and mention of the grant of the patent: **06.08.2025**
(21) Application number: 20178706.6
(22) Date of filing: 08.06.2020
(51) Int. Cl.: B60W 60/00, B60R 1/12

(54) **SAFETY SYSTEM FOR A VEHICLE COMBINATION**
SICHERHEITSSYSTEM FÜR EINE FAHRZEUGKOMBINATION
SYSTÈME DE SÉCURITÉ POUR UNE COMBINAISON DE VÉHICULE

(43) Date of publication of application: 15.12.2021
(73) Proprietor: KNORR-BREMSE Systeme für Nutzfahrzeuge GmbH, 80809 München (DE)
(72) Inventor: Boka, Jeno, 2120 Dunakeszi (HU); Dudas, Zsolt, 6728 Szeged (HU); Gyenis, Tamás, 1115 Budapest (HU); Gyurkó, Zoltán, 8771 Hahót (HU); Lindenmaier, Laszlo, 2040 Budaors (HU); Nemeth, Huba, 1116 Budapest (HU); Lóránt, Szabó, 6000 Kecskemét (HU); Szappanos, Andras, 2093 Budajeno (HU); Szöllosi, Adam, 1119 Budapest (HU); Vörös, Dániel, 1039 Budapest (HU)

(56) References cited:
- EP-A1- 2 848 498
- DE-A1- 102014 107 917
- DE-A1- 102015 118 578
- DE-A1- 102018 003 609
- US-A1- 2005 206 233
- US-A1- 2006 244 579
- US-A1- 2010 063 666

## Description

The present invention relates to a safety system for a vehicle combination with a towing vehicle and a trailer, and a method for increasing a safety of a vehicle combination with a towing vehicle and a trailer, and in particular to commercial vehicle protection and safety control features, and implications of an autonomous sensor apparatus thereon.

Commercial vehicle combinations, consisting of a towing vehicle and one or more trailers, face a number of safety-related issues due to their relative size in comparison to other vehicles, and due to the increased number of degrees of freedom resulting from the combination of several rigid components. In consequence, most driving tasks require a different handling for different types of trailers and load.

Several automated systems supporting a driver with determining the presence of a trailer, its type, load, and condition, as well as in various maneuvers have been proposed. One example for such a support consists in the determination of a tractrix, i.e. a curve or envelope of curves along which a trailer moves when pulled by a towing vehicle. For this kind of support, DE102013000199 (A1) discloses a method for assisting a driver of a vehicle-trailer combination when driving along a curve, involving a detection of a lane and a predetermination of a reference lane for drawing the vehicle in such a way that the tractrix curve lies within the lane or is centered on the lane. A further example is provided by DE102010025612A, which discloses a method for warning a driver of a towing vehicle with trailer before a collision with a stationary obstacle on a driving route with curve. This includes sending a signal and/or carrying out an intervention if a wheel of the vehicle approaches the obstacle. Yet another example may be found in DE102009041555A1, disclosing a method for warning a driver of a vehicle if there is a mobile object in the vicinity, or for anticipating a driving path of the vehicle if the object is stationary, followed by a warning of the driver if the object is determined to be located on the driving path.

US 2006/244579 A1 discloses an apparatus and a method for determining a spatial alignment of a semitrailer or trailer by using sensor data from pre-existing sensors on a towing vehicle, in particular from sensors e.g. from a blind-angle monitoring device, whose sensor data may be employed to measure angles which describe an alignment of the (semi-)trailer relative to the towing vehicle. The system may in particular be configured to prevent jack-knifing, or snaking above a threshold.

Automated systems designed for appropriately taking account of a trailer usually involve dedicated sensors on the vehicle, and so far generically assume a presence of a driver. With the advent of autonomous driving, high safety standards require an automatic and precise system performance for the corresponding task. A towing vehicle with a driving automation system should be able to effectuate driving tasks automatically for a variety of different trailers and loads. Advantageously, however, the system should only require a minimum of additional equipment on the vehicle.

For these reasons there is a demand for a system which which enables a towing vehicle to perform automatic driving tasks safely for a variety of trailers and loads.

At least to some extent, this is achieved by a system of claim 1, a towing vehicle of claim 10, a method according to claim 11, and a computer product according to claim 12. The dependent claims refer to further advantageous realizations of the subject matter of the independent claims.

The present invention relates to a safety system for a vehicle combination with a towing vehicle (like a tractor or truck) and a trailer, wherein the towing vehicle comprises a plurality of sensors configured to provide sensor data about an environment of the vehicle combination, or a state of the trailing vehicle. The system comprises a data collection module for collecting the sensor data, an extraction module for extracting, from the sensor data, information about a presence of the trailer or about a state of the trailer, and a control module, configured to control, based on the information, at least one driving task, or to provide the information to a further towing vehicle component in order to increase the safety of the vehicle combination.

The sensors on the towing vehicle may in particular be part of an autonomous driving system, i.e. hardware and software on board the towing vehicle that are collectively capable of performing part or all of a plurality of dynamic driving tasks for the towing vehicle on a sustained basis. In particular, the autonomous system may include back-facing exteroceptive sensors, as e.g. mirror replacement sensors.

The state of the trailer encompasses its characteristics (i.e. its geometry, or its type), and/or its current condition (i.e. a pose, an articulation angle between towing vehicle and trailer, or the trailer integrity). Providing the information to a further towing vehicle component may include sending the information, or a warning signal, to a driver.

The system may be configured as a supplement for an existing autonomous driving system. The data collection module is configured to tap the sensor data of the existing autonomous driving system.

The data collection module, extraction module, and control module may be embodied as separate devices, but they may also be partially or fully integrated into each other. Also, embodiments may stipulate that particular functions disclosed hereafter as performed by one module may in fact be performed by another one.

Optionally, especially if the towing vehicle is adapted to attach a semi-trailer, the plurality of sensors comprises at least one wheel speed sensor for measuring a wheel speed of a wheel of the towing vehicle, and the extraction module is configured to extract the information about the presence of the trailer based on an estimate of wheel slips from the sensor data of the at least one wheel speed sensor.

Especially if the truck is towing a semi-trailer, as in a case of a long-haul commercial vehicle, the axle load of the rear axle changes significantly when the trailer is connected to the vehicle. If the axle load changes, this has an effect on a rate or form of slips of a wheel. This can in particular lead to sudden changes in the wheel speed. The extraction module may be configured to estimate a number or form of wheel slips from the data of the wheel speed sensors of the wheels. Including data from wheel speed sensors of more than one wheel of the towing vehicle, especially at different axles, advantageously increases a reliability of the information.

Optionally the plurality of sensors comprises a sensor configured to detect a drive torque of an engine of the towing vehicle, the towing vehicle comprises an accelerometer for measuring an acceleration of the towing vehicle, and the extraction module is configured to extract the information about the presence of the trailer by a comparison of the acceleration of the towing vehicle with the drive torque provided by the engine.

The drive torque of the engine will depend on an acceleration of the vehicle, and on its mass. The extraction module may be configured to determine the mass of the vehicle, at least in relative terms, from the drive torque and the acceleration, and attribute additional mass, or mass exceeding that of the towing vehicle alone, to a trailer. This data may in particular be fused with the wheel slip data. For example, if the engine torque required to achieve the same acceleration increases, this may be used to validate a change in the wheel slips, and thus to corroborate the result of the two individual pieces of information.

Optionally, the plurality of sensors comprises at least one exteroceptive sensor (a sensor sensing an environment of the towing vehicle), configured such that a trailer attached to the towing vehicle is within a field of view of the exteroceptive sensor, and the data collection module is configured to collect the sensor data from the exteroceptive sensor.

Sensor data from exteroceptive sensors is obviously particularly advantageous for the task of the system. Based on data from such sensors, placed on an autonomous truck (with trailer interface), the extraction module may then easily determine the presence and other geometrical data (height, length, width, articulation angle) of the trailer. This information can be used either to support the driver of the towing vehicle, or to fully automate the driving process. Information from exteroceptive sensors on the towing vehicle is especially important as not all trailers are equipped with a CAN-communication interface. However, even in cases where a CAN-communication interface is present, the CAN data may be validated or corroborated by means of the sensors data of the exteroceptive sensors on the towing vehicle. Furthermore, the extraction module may be configured to determine a type of the trailer by truck perception sensors like e.g mirror replacement cameras. The trailer type is crucial, as different driving styles are required for each type of trailer.

Suitable for this task are any exteroceptive sensors on the towing vehicle which will have the trailer in their field of view. Particular examples include cameras sensitive to the visible spectrum, as e.g. mirror replacement cameras, cameras sensitive to the near infrared spectrum, sensors with direct distance information / time-of-flight sensors (e.g lidar or radar devices), or a calibrated stereo camera pair.

The estimation of the trailer characteristics from data of exteroceptive sensors may be fused, partially or fully, in order to obtain a more robust estimation. The extraction module and/or the control module may also be configured to validate or corroborate data from sensors with the trailer present in the field (e.g. in a case of big articulation angles), or check their operation.

The control module is configured to determine blind spots of the exteroceptive sensors, and to control at least one automated or assisted driving task based on the determined blind spot.

An exteroceptive sensor on the towing vehicle often has a specific blind spot, i.e. directions in its field of view where the line of sight is obstructed e.g. by geometric features of the towing vehicle. This blind spot may develop or increase if a trailer is in the field of view of the sensor. As the articulation angle of the trailer changes during the operation of the vehicle, the location of blind spots caused by the trailer will change accordingly. In addition, a laden trailer may cause a different blind spot from an unladen trailer, due to the cargo carried by the trailer. Thus, the load status of a trailer also affects the blind spots. The control module is configured to determine blind spots caused or increased by the trailer to particular perception sensors.

With regard to blind spots, the control module may in particular be configured to perform one or more of the following tasks: The effective field of view of a sensor may be verified. This may occur in a situation in which an object is detected by a sensor, but due to a change in the articulation angle should no longer be visible to the sensor (i.e., covered by the trailer). If the object is however still detected by the sensor, even though it is covered by the trailer, either the trailer articulation angle is not correctly identified, or the object detection sensor is malfunctioning. The control module may be configured to determine such a situation, and to send a corresponding information to a driver or to a location remote from the vehicle (as e.g. a workshop).

The control module may further be configured to identify false alarms of an environment perception (or object detection) sensor. It may be configured to identify false alarms only if the sensor is in fact supposed to have a part of its field of view covered by the trailer.

Furthermore, when fusing data from multiple sensors the control module may be configured to apply a higher-level logic, by taking into account that an object is not visible by a sensor only because the trailer is reducing the field of view of that sensor. This is particularly advantageous to take care of blind spots only caused at certain articulation angles. By knowing the blind spots caused by the trailer, the sensor fusion logic may be configured to remember an object in the proximity of the vehicle currently invisible due to blind spots caused by the trailer.

Optionally, the control module is configured to access information about a regular trailer state, and to detect in the state of the trailer an irregularity by a comparison with the information about the regular trailer state.

Data from perception sensors, e.g. camera-based detectors like mirror replacement cameras, thermal cameras, or lidar devices that have the ego truck and/or the trailer in their field of view can be used to detect irregular ego vehicle states. Such irregularities may in particular include broken parts of vehicle, open doors, malfunctioning lights, issues with tires, or any other vehicle conditions that deviate from a reference situation.

Optionally the control module is configured to detect one or more irregularities out of the following: An abnormal trailer articulation angle, an abnormal trailer horizontal angle, a trailer open (e.g. through an open door), a trailer accessory irregularity (as e.g. irregularly switched-off lights), a wheel irregularity, a cargo irregularity, a fire, and/or damage.

Wheel irregluarities may in particular include a situation where a wheel is lifted although settings stipulate that this should not be the case, a situation where a wheel is not lifted but according to the settings it should be, a flat tire, a burning tire, a burning cover, and/or overheating wheels. Burning and overheating may in particular be detected from thermal-range cameras.

Optionally, if the automated driving tasks include planning of a vehicle trajectory, the control module is further configured to receive the planned vehicle trajectory, and to determine, based on the information about a presence or a state of the trailer, a tractrix of the trailer for the planned trajectory.

If a presence of a trailer and its geometric data (like height, length, width, articulation angle) is determined, these data may be used to determine the tractrix of the truck-trailer vehicle combination according to one or more planned trajectories. This can be done for various truck-trailer combinations. The type of the trailer could be determined from sensor data and/or a classification of the trailer, which may serve as a further input for the tractrix calculation.

Optionally, the control module is further configured to communicate by wireless communication the information about the presence of the trailer or the state of the trailer to a system remote from the vehicle.

The communication could e.g. employ a vehicle-to-everything infrastructure to communicate to a workshop, or to a control center.

Embodiments further refer to a towing vehicle for attaching a trailer, in particular an autonomous vehicle, with a plurality of sensors configured to collect sensor data for automated or assisted driving tasks, characterized by a safety system as described above. The system may be configured as a supplement to a driving automation system of the towing vehicle.

The present invention further relates to a method for increasing a safety of a vehicle combination with a towing vehicle and a trailer, the towing vehicle comprising a plurality of sensors configured to provide sensor data about an environment or state of the vehicle combination. The method comprises the steps:
Collecting the sensor data;
Extracting, from the sensor data, information about a presence of the trailer or about a state of the trailer;
Controlling, based on the extracted information, at least one driving task or providing the information to other vehicle component to increase the safety of the vehicle combination.

This method may also be implemented in software or a computer program product and the order of steps may not be important to achieve the desired effect. Embodiments of the present invention can, in particular, be implemented by software or a software module in an electronic control unit. Therefore, embodiments relate also to a computer product with a program code for performing the method when the computer program is executed on a processor.

Advantages of a safety system and of the method as described above in particular include solutions to the following four trailer-specific problems, which are particularly relevant to commercial vehicles:
1. Trailer presence detection,
2. Blind spot detection,
3. Trailer Anomalie and irregular state detection,
4. Tractrix calculation.

All solutions rely only on the existing environment perception sensor cluster. None of these solutions require an installation of additional sensors or hardware on the towing vehicle.

Some examples of the systems and methods will be described in the following by way of examples only, and with respect to the accompanying figures, in which:
- Fig. 1: shows a schematic representation of a vehicle combination with a safety system according to the present invention.
- Fig. 2: shows a side view of a vehicle combination of a towing vehicle and a semi-trailer with different forces on the front axle and the rear axle of the towing vehicle due to the weight of the semi-trailer.
- Fig. 3: illustrates a detection of a presence and characteristics of a trailer by the safety system.
- Fig. 4: illustrates a blind spot due to the trailer for an exemplary mirror replacement sensor.
- Fig. 5: illustrates a determination, by means of an embodiment of the safety system, of a precise position of the trailer from two mirror replacement sensors.
- Fig. 6: schematically displays parts of an architecture relevant for a tractrix determination.
- Fig. 7: displays steps of a method for increasing the safety of a vehicle combination.
- Fig. 8: shows some details of a tractrix determination as an exemplary part of the method.

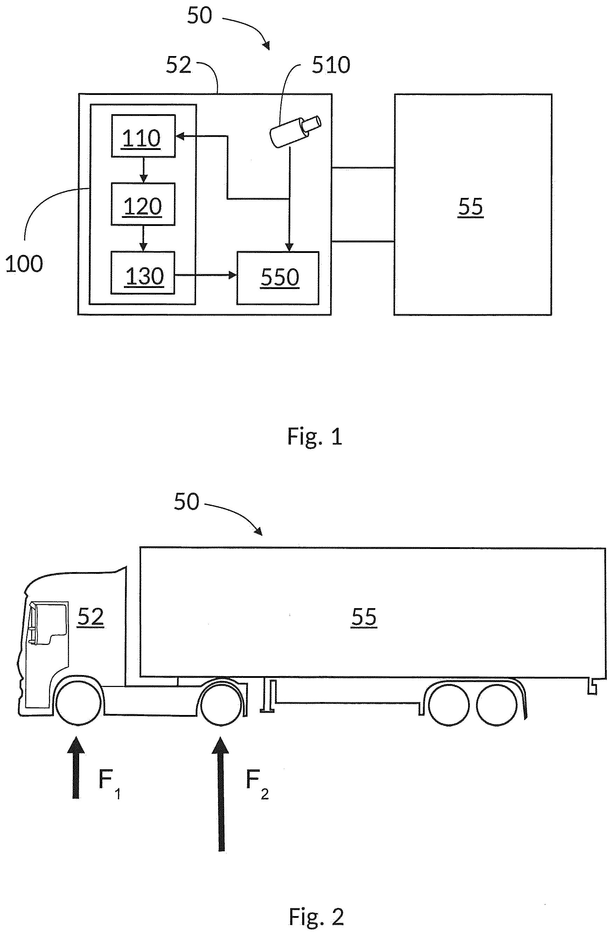

**Fig. 1** shows a schematic representation of a vehicle combination 50 with a towing vehicle 52 and a trailer 55. The towing vehicle 52 comprises a plurality of sensors 510, configured to provide sensor data about an environment of the vehicle combination or a state of the towing vehicle for an automatic driving task, effectuated in the figure by a module 550. The towing vehicle 52 also comprises a safety system 100, with a data collection module 110 for collecting the sensor data, an extraction module 120 for extracting, from the sensor data, information about a presence of the trailer 55 or about a state of the trailer 55, and a control module 130, configured to control, based on the extracted information, at least one driving task (or module 550), or to provide the information to a further component of the towing vehicle 52, which may include a driver, in order to increase the safety of the vehicle combination 50.

The modules 110, 120, 130 of the safety system 100 may be partially or fully integrated into each other, and they may also be integrated into existing devices as e.g. specific electronic control units on board the towing vehicle 52.

**Fig. 2** illustrates the different strains on axles of the towing vehicle 52 due to a semi-trailer 55. The trailer 55 exerts additional pressure on the rear axle, such that a force F₂ on wheels of the rear axle is greater than a force F₁ on wheels of the front axle. This results in different rates and forms of wheel slips, both when comparing the situation where there is no trailer 55 to the situation where a trailer 55 is present, as well as between wheels of the front axle compared to wheels of the rear axle in the situation where the trailer 55 is present. The weight is furthermore different for an empty trailer compared to a trailer with cargo, and the extraction system may be configured to extract an information on the weight of the load, e.g. by comparison with a nominal weight of the semi-trailer.

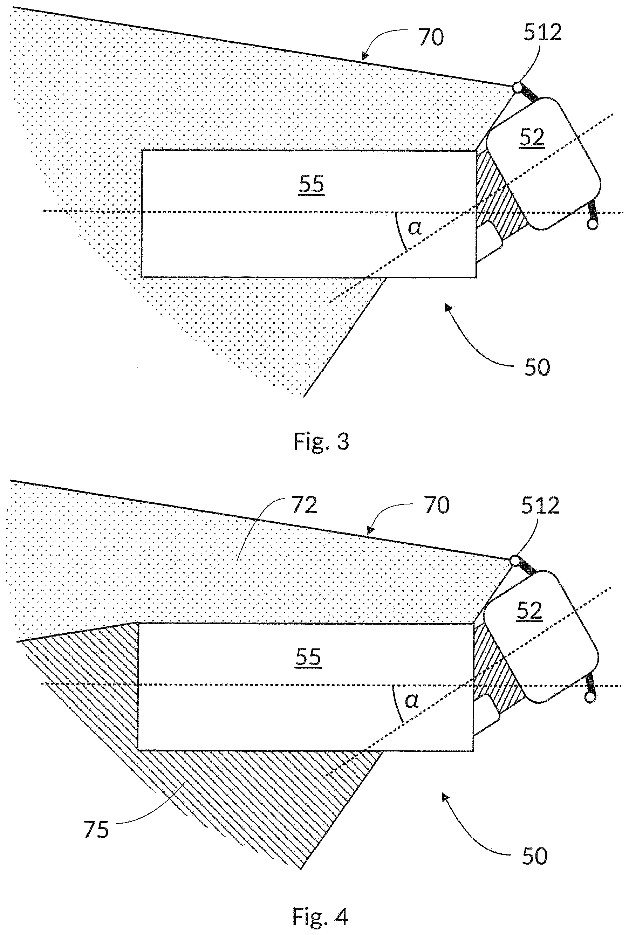

**Fig. 3** illustrates a way in which the system may increase the safety of the vehicle combination by detecting a presence and characteristics of a trailer 55. Depicted in the figure is a vehicle combination 50 with a towing vehicle 52 and a trailer 55, viewed from above. The towing vehicle 52 and the trailer 55 enclose an articulation angle α. For a mirror replacement sensor 512 of the towing vehicle 52, a field of view 70 is indicated. By tapping data from the mirror replacement sensor 512, or from other exteroceptive sensors of the towing vehicle 52, a presence of the trailer 55 may be detected by the safety system 100 located on the towing vehicle 52 (cf. Fig. 1). Furthermore, several characteristics of the trailer 55 may be determined, including a trailer type (e.g. log-trailer, tanker, curtainsider trailer), the articulation angle α, or a height and/or width of the trailer 55.

The extraction module 120 may be configured to estimate the type of the trailer 55 by means of training a neural network. The control module 130 may be configured to warn the driver, based on the estimated trailer type, if a current driving style of the vehicle combination 50 is not suitable for the trailer type identified, and/or the control module 130 may control an automated system of the towing vehicle 52 to drive accordingly.

The articulation angle α as well as the height and width of the trailer 55 may be estimated by identifying trailer properties from sensor data of sensors with the trailer 55 in their respective field of view. This is normally a static part of the scene. The extraction module 120 may be configured to segment an image, and to locate the trailer on it. After finding the trailer location on the image, the extraction module 120 may be configured to identify a current position or pose of the trailer 55 by comparing to a reference situation (as e.g. a straight position, which may be picked up at a time when the vehicle combination 50 is standing). For this task, the system 100 is advantageously configured to store and retrieve appropriate parts of the sensor data.

An estimation of geometric data of the trailer 55 may also be performed using scout sensor technology. Data from perception sensors installed on the towing vehicle with the trailer 55 in their respective fields of view may be employed in the extraction module 120 to estimate the geometric size of the trailer by utilizing known perspective properties of the sensors.

**Fig. 4** illustrates a blind spot augmentation due to a trailer for an exemplary mirror replacement sensor 512. Depicted is the same situation as in Fig. 3. The field of view 70 of the mirror replacement sensor 512 is divided into a part 72 which is still visible, and a part 75 where the line of sight of the mirror replacement sensor 512 is obstructed by the trailer 55. The extraction module 120 my be configured to detect the blind spot from the sensor data, e.g. through pattern recognition and localization of the trailer in the field of view 70, through inference from trailer characteristics (cf. Fig. 3), or through cross correlation with data originating from other sensors. The control module 130 may be configured to control driving tasks by taking into account the reduced field of view 70 of the mirror replacement sensor 512. Such a control of a driving task may include a suppression of false alarms due to the reduced field of view 70, a retention of a position of an object localized in the vicinity of the vehicle, even if the mirror replacement sensor 512 is no longer able to detect said object, or a check if a determined blind spot coincides with the expectation derived from the measures of the trailer 55 and the articulation angle α.

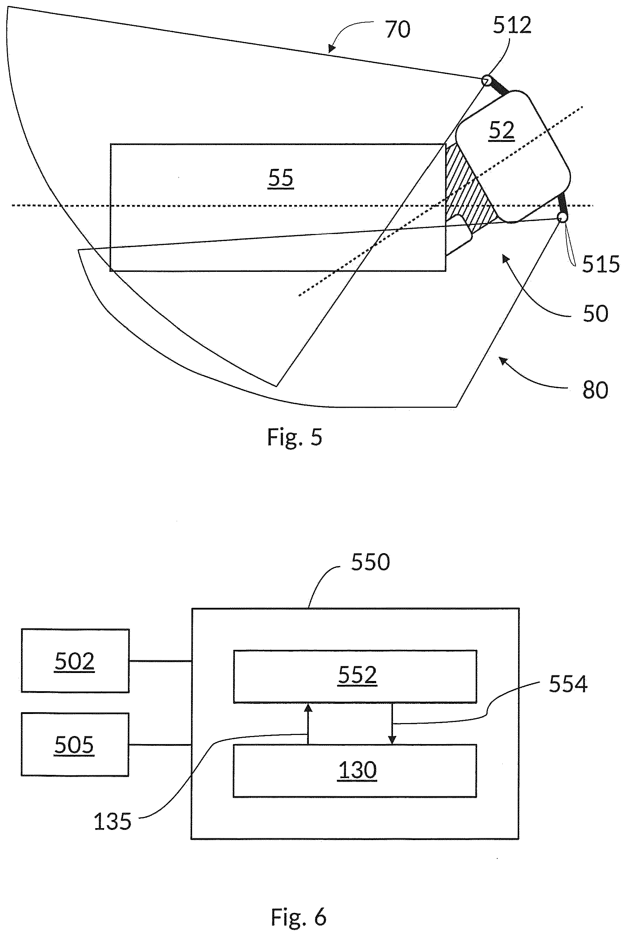

**Fig. 5** illustrates a position determination of the trailer 55 by means of sensor data from two mirror replacement sensors 512, 515. Depicted is again the situation of Fig. 3 and Fig. 4. In the figure, the fields of view 70, 80 of the respective mirror replacement sensors 512, 515 are indicated for the unobstructed case, i.e. as they would appear under absence of the trailer 55. By combining measures of the trailer (cf. Fig. 3) and blind spot information (cf. Fig. 4), a precise position (or pose) of the trailer 55 is determined in the extraction module 120 (which is not depicted in the figure). The information on the precise pose is in particular useful for a tractrix determination.

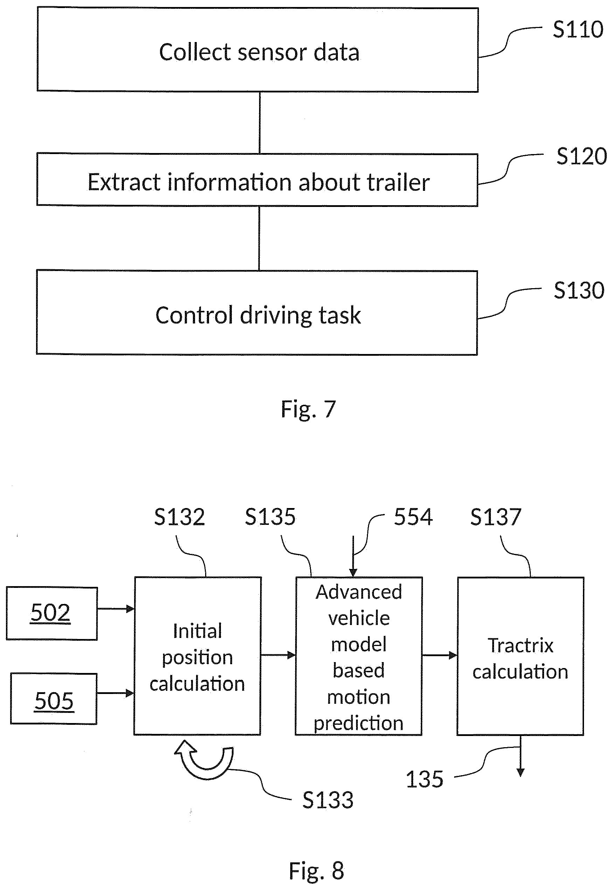

**Fig. 6** displays a schematic embodiment of parts of an architecture relevant for a tractrix determination. In this embodiment, at least a part of the system 100 is integrated into another system of the towing vehicle 52: The figure shows the control module 130, integrated into a module 500, which here is an on-board controller. The on-board controller module 500 comprises software for highly automated driving (HAD), 552, performing in particular an autonomous trajectory planning for the towing vehicle. The HAD software 552 is in particular configured to transmit the planned trajectory 554 to the control module 130. With data flow directed by the on-board controller 550, the control module 130 also receives fused sensor data 502 from sensors of the towing vehicle (via the data collection module 110 and the extraction module 120; this is not depicted in the figure), and may furthermore be configured to receive data from the truck internal vehicle CAN 505. Fused external sensor data may combine data from cameras, lidar and radar devices, and/or ultrasonic sensors. On the basis of the available data - in particular planned trajectory, geometric data of the towing vehicle 52, trailer presence, the type of the trailer 55 (e.g. a semi-, central axle, draw bar, dolly, blink trailer), geometric data of the trailer 55 (such as width, height, length, and axle position), the articulation angle of the trailer 55 - an algorithm determines the outermost tractrix 135, together with time data, of the vehicle trailer combination along one or more predefined trajectories (cf. Fig. 8). The control module 130 is configured to share the tractrix 135 with the HAD software 552.

Based on this output, the control module 130 my be configured to validate the planned trajectory. Stationary or moving objects, whose position may be extracted from exteroceptive sensor data, may be localized with respect to the curves of the tractrix 135. If these objects are within the tractrix, a time of a collision may also be determined in the control module 130, based on the time data.

**Fig. 7** displays steps of a method for increasing a safety of a vehicle combination 50 with a towing vehicle 52 and a trailer 55, wherein the towing vehicle 52 comprises a plurality of sensors 510 configured to provide sensor data about an environment or state of the vehicle combination 50. The steps comprise:
Collecting S110 the sensor data;
Extracting S120, from the sensor data, information about a presence of the trailer 55 or about a state of the trailer 55;
Controlling, S130, based on the extracted information, at least one driving task or providing the information to another component of the towing vehicle 52 in order to increase the safety of the vehicle combination.

**Fig. 8** shows some details of a tractrix determination as an embodiment of a part of the step of controlling S130 a driving task. The input for this part of the method comprises fused sensor data 502 and data from the truck internal vehicle CAN 505.

The detailed steps comprise calculating S132 the initial position of the vehicle combination 50, based on the available geometrical and sensor data. The term position, in this context, includes a relative position of various points of the trailer 55 as well as an orientation of the trailer 55. An outcome of the step of calculating S132 the initial position may be improved by validating S133 the outcome by means of positions calculated in previous calculation cycles.

Another step comprises predicting S135, using the planned trajectories, the motion of the truck - trailer combination 50, or specific points thereof. Predicting S135 may in particular include applying advanced vehicle models. In special cases, road conditions (e.g. a friction coefficient between the road and a tire) could be considered as well.

A further step includes calculating S137 a tractrix from moving the vehicle combination 50 along the trajectory of the outermost assumed positions, which when connected result in one or more tractrices 135 along the planned trajectory. As an important advantage, the algorithm may not only record the outermost positions, but also a time frame, detailing the point in time when the vehicle combination 50 will assume a particular position. A further advantage of the proposed method consists in the lack of a requirement of any sensors on the trailer 55, while still being able to predict motion and tractrix of the vehicle combination 50.

The methods detailed in Fig. 7 and Fig. 8 may also be computer-implemented. A person of skill in the art would readily recognize that various steps of the above-described methods may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on the computer or processor.

The description and drawings illustrate the principles of the invention. It will thus be appreciated that those skilled in the art will be able to devise various arrangements that, although not explicitly described or shown herein, embody the subject matter as defined by the claims and supported by the description, and are included within its scope.

Furthermore, while each embodiment may stand on its own as a separate example, it is to be noted that in other embodiments the defined features can be combined differently, i.e. a particular feature described in one embodiment may also be realized in other embodiments. Such combinations are covered by the disclosure herein, unless it is stated that a specific combination is not intended.

Functions of various elements shown in the figures, when provided by a processor, may be provided by a single dedicated processor, by a single shared processor, or by a plurality of individual processors, some of which may be shared. Moreover, explicit use of the term "processor" or "electronic control unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

### LIST OF REFERENCE SIGNS

- 50: vehicle combination
- 52: towing vehicle (tractor, truck)
- 55: trailer
- 70: field of view of a mirror replacement sensor
- 72: field of view of mirror replacement sensor if a trailer is present
- 75: obstructed part of field of view of mirror replacement sensor
- 80: field of view of another mirror replacement sensor
- 100: safety system
- 110: data collection module
- 120: extraction module
- 130: control module
- 135: tractrix
- 502: fused sensor data
- 505: data from truck internal vehicle CAN
- 510: plurality of sensors on towing vehicle
- 512: a mirror replacement sensor
- 515: another mirror replacement sensor
- 550: module for performing one or more driving tasks
- 552: HAD software
- 554: planned trajectory
- S110, S120, S130: steps of a method to increase a safety of a vehicle combination
- S132, S133, S 135, S137: steps of a tractrix determination
- F₁, F₂: forces on axles of the towing vehicle

## Claims

1. A safety system (100) for a vehicle combination (50) with a towing vehicle (52) and a trailer (55), the towing vehicle (52) comprising a plurality of sensors (510) configured to provide sensor data about an environment of the vehicle combination (50) or a state of the towing vehicle (52) wherein the plurality of sensors (510) includes exteroceptive sensors,
the safety system comprising:
a data collection module (110) for collecting the sensor data;
an extraction module (110) for extracting, from the sensor data, information about a presence of the trailer (55) or about a state of the trailer (55);
a control module (130), configured to control, based on the extracted information, at least one driving task, or to provide the information to another component of the towing vehicle (52) in order to increase the safety of the vehicle combination (50),
**characterized in that**
the control module (130) is configured to determine blind spots of the exteroceptive sensors caused or increased by the trailer, and to control at least one automated or
assisted driving task based on the determined blind spot.

2. The safety system (100) according to claim 1, wherein the plurality of sensors (510) comprises at least one wheel speed sensor for measuring a wheel speed of a wheel of the towing vehicle (52),
**characterized in that**
the extraction module (120) is configured to extract the information about the presence of the trailer (55) based on an estimate of wheel slips from the sensor data of the at least one wheel speed sensor.

3. The safety system (100) according to claim 2, wherein the plurality of sensors (510) comprises a sensor configured to detect a drive torque of an engine of the towing vehicle (52), and an accelerometer for measuring an acceleration of the towing vehicle (52),
**characterized in that**
the extraction module (120) is configured to extract the information about the presence of the trailer (55) by a comparison of the acceleration of the towing vehicle (52) with the drive torque of the engine.

4. The safety system (100) according to one of the preceding claims, wherein the plurality of sensors (510) comprises at least one exteroceptive sensor with a field of view including at least a portion of the trailer,
**characterized in that**
the data collection module (110) is configured to collect the sensor data from the exteroceptive sensor; and
the extraction module (120) is configured to extract the information about the presence of the trailer (55) and/or the information about the state of the trailer (55) from the data of the exteroceptive sensor.

5. The safety system (100) according to one of the preceding claims, wherein the plurality of sensors (510) includes exteroceptive sensors,
**characterized in that**
the control module (130) is configured to access information about a regular trailer state and to detect in the state of the trailer (55) an irregularity by a comparison with the information about the regular trailer state.

6. The safety system (100) according to claim 5,
**characterized in that**
the control module (130) is configured to detect one or more irregularities out of the following list:
• abnormal trailer (55) articulation angle,
• abnormal trailer (55) horizontal angle,
• trailer (55) open,
• trailer (55) accessory irregularity,
• wheel irregularity,
• cargo irregularity,
• fire,
• damage.

7. The safety system (100) according to one of the preceding claims, wherein the automated driving tasks include planning of a vehicle trajectory,
**characterized in that**
the control module (130) is further configured to receive the planned vehicle trajectory, and to determine, based on the information about a presence of the trailer (55) and a state of the trailer (55), a tractrix of the trailer (55) for the planned trajectory.

8. The safety system (100) according to one of the preceding claims,
**characterized in that**
the control module (130) is further configured to communicate by wireless communication the information about the presence of the trailer (55) and/or about the state of the trailer (55) to a system remote from the vehicle combination (50).

9. A towing vehicle (52) for attaching a trailer (55), in particular an autonomous towing vehicle (52), with a plurality of sensors (510) configured to collect sensor data for automated or assisted driving tasks, wherein the plurality of sensors (510) includes exteroceptive sensors,
**characterized in that**
the towing vehicle (52) comprises the safety system (100) according to one of the preceding claims.

10. A method for increasing a safety of a vehicle combination (50) with a towing vehicle (52) and a trailer (55), the towing vehicle (52) comprising a plurality of sensors (510) configured to provide sensor data about an environment or state of the towing vehicle (52) wherein the plurality of sensors (510) includes exteroceptive sensors,
**characterized by**
collecting (S110) the sensor data;
extracting (S120), from the sensor data, information about a presence of the trailer (55) or about a state of the trailer (55);
controlling (S130), based on the extracted information, at least one driving task or providing the information to another component of the towing vehicle (52) in order to increase the safety of the vehicle combination (50) including determining blind spots of the exteroceptive sensors caused or increased by the trailer, and controlling at least one automated or assisted driving task based on the determined blind spot.

11. A computer product having a program code for performing the method of claim 10, when the computer program is executed on a computer or data processing unit.

## Patentansprüche

1. Sicherheitssystem (100) für ein Fahrzeuggespann (50) mit einem Zugfahrzeug (52) und einem Anhänger (55), wobei das Zugfahrzeug (52) eine Vielzahl von Sensoren (510) umfasst, die dazu konfiguriert sind, Sensordaten über eine Umgebung des Fahrzeuggespanns (50) oder einen Zustand des Zugfahrzeugs (52) bereitzustellen, wobei die Vielzahl von Sensoren (510) exterozeptive Sensoren einschließt, wobei das Sicherheitssystem umfasst:
ein Datensammelmodul (110) zum Sammeln der Sensordaten;
ein Extraktionsmodul (110) zum Extrahieren von Informationen über ein Vorhandensein des Anhängers (55) oder über einen Zustand des Anhängers (55) aus den Sensordaten;
ein Steuerungsmodul (130), das dazu konfiguriert ist, auf Basis der extrahierten Informationen mindestens eine Fahraufgabe zu steuern oder die Informationen einer anderen Komponente des Zugfahrzeugs (52) bereitzustellen, um die Sicherheit des Fahrzeuggespanns (50) zu erhöhen,
**dadurch gekennzeichnet, dass**
das Steuerungsmodul (130) dazu konfiguriert ist, tote Winkel der exterozeptiven Sensoren, die durch den Anhänger verursacht oder vergrößert werden, zu bestimmen und auf Basis des bestimmten toten Winkels mindestens eine automatisierte oder unterstützte Fahraufgabe zu steuern.

2. Sicherheitssystem (100) nach Anspruch 1, wobei die Vielzahl von Sensoren (510) mindestens einen Raddrehzahlsensor zum Messen einer Raddrehzahl eines Rades des Zugfahrzeugs (52) umfasst,
**dadurch gekennzeichnet, dass**
das Extraktionsmodul (120) dazu konfiguriert ist, die Informationen über das Vorhandensein des Anhängers (55) auf Basis einer Schätzung von Radschlüpfen aus den Sensordaten des mindestens einen Raddrehzahlsensors zu extrahieren.

3. Sicherheitssystem (100) nach Anspruch 2, wobei die Vielzahl von Sensoren (510) einen Sensor, der dazu konfiguriert ist, ein Antriebsdrehmoment eines Motors des Zugfahrzeugs (52) zu erkennen, und einen Beschleunigungsmesser zum Messen einer Beschleunigung des Zugfahrzeugs (52) umfasst,
**dadurch gekennzeichnet, dass**
das Extraktionsmodul (120) dazu konfiguriert ist, die Informationen über das Vorhandensein des Anhängers (55) durch einen Vergleich der Beschleunigung des Zugfahrzeugs (52) mit dem Antriebsdrehmoment des Motors zu extrahieren.

4. Sicherheitssystem (100) nach einem der vorstehenden Ansprüche, wobei die Vielzahl von Sensoren (510) mindestens einen exterozeptiven Sensor mit einem Sichtfeld umfasst, das mindestens einen Abschnitt des Anhängers einschließt,
**dadurch gekennzeichnet, dass**
das Datensammelmodul (110) dazu konfiguriert ist, die Sensordaten von dem exterozeptiven Sensor zu sammeln; und
das Extraktionsmodul (120) dazu konfiguriert ist, die Informationen über das Vorhandensein des Anhängers (55) und/oder die Informationen über den Zustand des Anhängers (55) aus den Daten des exterozeptiven Sensors zu extrahieren.

5. Sicherheitssystem (100) nach einem der vorstehenden Ansprüche, wobei die Vielzahl von Sensoren (510) exterozeptive Sensoren einschließt,
**dadurch gekennzeichnet, dass**
das Steuerungsmodul (130) dazu konfiguriert ist, auf Informationen über einen regulären Anhängerzustand zuzugreifen und durch einen Vergleich mit den Informationen über den regulären Anhängerzustand eine Unregelmäßigkeit im Zustand des Anhängers (55) zu erkennen.

6. Sicherheitssystem (100) nach Anspruch 5,
**dadurch gekennzeichnet, dass**
das Steuerungsmodul (130) dazu konfiguriert ist, eine oder mehrere Unregelmäßigkeiten aus der folgenden Liste zu erkennen:
- anormaler Knickwinkel des Anhängers (55),
- anormaler Horizontalwinkel des Anhängers (55),
- Anhänger (55) offen,
- Unregelmäßigkeit von Zubehör des Anhängers (55),
- Unregelmäßigkeit von Rädern,
- Unregelmäßigkeit von Fracht,
- Brand,
- Schaden.

7. Sicherheitssystem (100) nach einem der vorstehenden Ansprüche, wobei die automatisierten Fahraufgaben Planen einer Fahrzeugtrajektorie einschließen,
**dadurch gekennzeichnet, dass**
das Steuerungsmodul (130) weiter dazu konfiguriert ist, die geplante Fahrzeugtrajektorie zu empfangen und auf Basis der Informationen über ein Vorhandensein des Anhängers (55) und einen Zustand des Anhängers (55) eine Traktrix des Anhängers (55) für die geplante Trajektorie zu bestimmen.

8. Sicherheitssystem (100) nach einem der vorstehenden Ansprüche,
**dadurch gekennzeichnet, dass**
das Steuerungsmodul (130) weiter dazu konfiguriert ist, die Informationen über das Vorhandensein des Anhängers (55) und/oder über den Zustand des Anhängers (55) über drahtlose Kommunikation an ein von dem Fahrzeuggespann (50) entferntes System zu kommunizieren.

9. Zugfahrzeug (52) zum Anhängen eines Anhängers (55), insbesondere ein autonomes Zugfahrzeug (52), mit einer Vielzahl von Sensoren (510), die dazu konfiguriert sind, Sensordaten für automatisierte oder assistierte Fahraufgaben zu sammeln, wobei die Vielzahl von Sensoren (510) exterozeptive Sensoren einschließt,
**dadurch gekennzeichnet, dass**
das Zugfahrzeug (52) das Sicherheitssystem (100) nach einem der vorstehenden Ansprüche umfasst.

10. Verfahren zum Erhöhen einer Sicherheit eines Fahrzeuggespanns (50) mit einem Zugfahrzeug (52) und einem Anhänger (55), wobei das Zugfahrzeug (52) eine Vielzahl von Sensoren (510) umfasst, die dazu konfiguriert sind, Sensordaten über eine Umgebung oder einen Zustand des Zugfahrzeugs (52) bereitzustellen, wobei die Vielzahl von Sensoren (510) exterozeptive Sensoren einschließt,
**gekennzeichnet durch**
Sammeln (S110) der Sensordaten;
Extrahieren (S120) von Informationen über ein Vorhandensein des Anhängers (55) oder über einen Zustand des Anhängers (55) aus den Sensordaten;
Steuern (S130) mindestens einer Fahraufgabe auf Basis der extrahierten Informationen oder Bereitstellen der Informationen an eine andere Komponente des Zugfahrzeugs (52), um die Sicherheit des Fahrzeuggespanns (50) zu erhöhen, was das Bestimmen von toten Winkeln der exterozeptiven Sensoren, die durch den Anhänger verursacht oder vergrößert werden, und Steuern mindestens einer automatisierten oder assistierten Fahraufgabe auf Basis des bestimmten toten Winkels einschließt.

11. Computerprodukt mit einem Programmcode zum Durchführen des Verfahrens nach Anspruch 10, wenn das Computerprogramm auf einem Computer oder einer Datenverarbeitungseinheit ausgeführt wird.

## Revendications

1. Système de sécurité (100) pour une combinaison de véhicule (50) avec un véhicule tracteur (52) et une remorque (55), le véhicule tracteur (52) comprenant une pluralité de capteurs (510) configurés pour fournir des données de capteur sur l'environnement de la une combinaison de véhicule (50) ou sur un état du véhicule tracteur (52), dans lequel la pluralité de capteurs (510) incluent des capteurs extéroceptifs, le système de sécurité comprenant :
un module de collecte de données (110) pour collecter les données de capteur ;
un module d'extraction (110) pour extraire, à partir des données de capteur, des informations sur la présence de la remorque (55) ou sur un état de la remorque (55) ;
un module de commande (130), configuré pour commander, sur la base des informations extraites, au moins une tâche de conduite, ou pour fournir les informations à un autre composant du véhicule tracteur (52) afin d'augmenter la sécurité de la combinaison de véhicule (50),
**caractérisé en ce que**
le module de commande (130) est configuré pour déterminer des angles morts des capteurs extéroceptifs provoqués ou accentués par la remorque et pour commander au moins une tâche de conduite automatisée ou assistée sur la base de l'angle mort déterminé.

2. Système de sécurité (100) selon la revendication 1, dans lequel la pluralité de capteurs (510) comprennent au moins un capteur de vitesse de roue pour mesurer une vitesse de roue d'une roue du véhicule tracteur (52),
**caractérisé en ce que**
le module d'extraction (120) est configuré pour extraire les informations sur la présence de la remorque (55) sur la base d'une estimation des patinages de roues à partir des données de capteur du au moins un capteur de vitesse de roue.

3. Système de sécurité (100) selon la revendication 2, dans lequel la pluralité de capteurs (510) comprennent un capteur configuré pour détecter un couple d'entraînement d'un moteur du véhicule tracteur (52) et un accéléromètre pour mesurer une accélération du véhicule tracteur (52),
**caractérisé en ce que**
le module d'extraction (120) est configuré pour extraire les informations sur la présence de la remorque (55) par une comparaison de l'accélération du véhicule tracteur (52) avec le couple d'entraînement du moteur.

4. Système de sécurité (100) selon l'une des revendications précédentes, dans lequel la pluralité de capteurs (510) comprennent au moins un capteur extéroceptif avec un champ de vision incluant au moins une partie de la remorque,
**caractérisé en ce que**
le module de collecte de données (110) est configuré pour collecter les données de capteur du capteur extéroceptif ; et
le module d'extraction (120) est configuré pour extraire les informations sur la présence de la remorque (55) et/ou les informations sur l'état de la remorque (55) à partir des données du capteur extéroceptif.

5. Système de sécurité (100) selon l'une des revendications précédentes, dans lequel la pluralité de capteurs (510) incluent des capteurs extéroceptifs,
**caractérisé en ce que**
le module de commande (130) est configuré pour accéder à des informations sur un état normal de remorque et pour détecter une anomalie dans l'état de la remorque (55) par une comparaison avec les informations sur l'état normal de remorque.

6. Système de sécurité (100) selon la revendication 5,
**caractérisé en ce que**
le module de commande (130) est configuré pour détecter une ou plusieurs anomalies parmi la liste suivante :
- un angle d'articulation anormal de remorque (55),
- un angle horizontal anormal de remorque (55),
- une ouverture de remorque (55),
- une anomalie d'accessoire de remorque (55),
- une anomalie de roue,
- une anomalie de cargaison,
- un incendie,
- des dommages.

7. Système de sécurité (100) selon l'une des revendications précédentes, dans lequel les tâches de conduite automatisée incluent la planification d'une trajectoire de véhicule,
**caractérisé en ce que**
le module de commande (130) est en outre configuré pour recevoir la trajectoire de véhicule planifiée et pour déterminer, sur la base des informations sur la présence de la remorque (55) et un état de la remorque (55), une tractrice de la remorque (55) pour la trajectoire planifiée.

8. Système de sécurité (100) selon l'une des revendications précédentes,
**caractérisé en ce que**
le module de commande (130) est en outre configuré pour communiquer par communication sans fil les informations sur la présence de la remorque (55) et/ou sur l'état de la remorque (55) à un système distant de la combinaison de véhicule (50).

9. Véhicule tracteur (52) permettant d'atteler une remorque (55), notamment un véhicule tracteur autonome (52), équipé d'une pluralité de capteurs (510) conçus pour collecter des données de capteur pour des tâches de conduite automatisée ou assistée, dans lequel la pluralité de capteurs (510) incluent des capteurs extéroceptifs,
**caractérisé en ce que**
le véhicule tracteur (52) comprend le système de sécurité (100) selon l'une des revendications précédentes.

10. Procédé permettant d'augmenter la sécurité d'une combinaison de véhicule (50) présentant un véhicule tracteur (52) et une remorque (55), le véhicule tracteur (52) comprenant une pluralité de capteurs (510) configurés pour fournir des données de capteur sur un environnement ou un état du véhicule tracteur (52), dans lequel la pluralité de capteurs (510) incluent des capteurs extéroceptifs,
**caractérisé par**
la collecte (S110) des données de capteur ;
l'extraction (S120), à partir des données de capteur, d'informations sur la présence de la remorque (55) ou sur un état de la remorque (55) ;
la commande (S130), sur la base des informations extraites, d'au moins une tâche de conduite ou la fourniture des informations à un autre composant du véhicule tracteur (52) afin d'augmenter la sécurité de la combinaison de véhicule (50) incluant la détermination d'angles morts des capteurs extéroceptifs provoqués ou accentués par la remorque, et la commande d'au moins une tâche de conduite automatisée ou assistée sur la base de l'angle mort déterminé.

11. Produit informatique présentant un code de programme permettant d'effectuer le procédé selon la revendication 10, lorsque le programme informatique est exécuté sur un ordinateur ou une unité de traitement de données.
